Europäisches Patentamt

European Patent Office

Office européen des brevets

(19)

(11) Veröffentlichungsnummer: **0 188 713**
**B1**

(12) **EUROPÄISCHE PATENTSCHRIFT**

(45) Veröffentlichungstag der Patentschrift: **11.04.90**

(51) Int. Cl.⁵: **F 04 C 29/02**

(21) Anmeldenummer: **85115368.4**

(22) Anmeldetag: **04.12.85**

(54) Ölfördereinrichtung für Vakuumpumpen.

(30) Priorität: **22.12.84 DE 3447193**
**19.11.85 DE 3540959**

(43) Veröffentlichungstag der Anmeldung:
**30.07.86 Patentblatt 86/31**

(45) Bekanntmachung des Hinweises auf die
Patenterteilung:
**11.04.90 Patentblatt 90/15**

(84) Benannte Vertragsstaaten:
**CH DE FR GB LI**

(56) Entgegenhaltungen:
**WO-A-83/04075**
**DE-A-2 725 299**
**DE-A-3 007 267**
**DE-C- 761 748**

(73) Patentinhaber: **LEYBOLD**
**AKTIENGESELLSCHAFT**
**Bonner Strasse 498**
**D-5000 Köln 51 (DE)**

(72) Erfinder: **Frieden, Peter**
**Raumerstrasse 2a**
**D-5000 Köln 41 (DE)**
Erfinder: **Frings, Heinz**
**Mainstrasse 30**
**D-5000 Köln 50 (DE)**
Erfinder: **Ronthaler, Karl-Heinz**
**Frankengraben 8**
**D-5352 Zülpich (DE)**

(74) Vertreter: **Leineweber, Jürgen, Dipl.-Phys.**
**Nagelschmiedshütte 8**
**D-5000 Köln 40 (DE)**

Courier Press, Leamington Spa, England.

## Beschreibung

Die Erfindung bezieht sich auf eine Ölfördereinrichtung für Vakuumpumpen mit einem teilweise mit Öl gefüllten, unter Vakuum stehenden Seitenraum, vorzugsweise für Wälzkolben-Vakuumpumpen, bei welchen ein in den Seitenraum hineinragender Wellenstumpf den Antrieb der Ölfördereinrichtung bildet.

Eine Ölfördereinrichtung dieser Art ist durch die PCT-Anmeldeschrift WO 83/04075 bekannt. Die Ölfördereinrichtung ist als selbstansaugende Seitenkanalpumpe ausgebildet. Nachteilig an dieser Lösung ist zunächst, daß eine Pumpe dieser Art einen relativ hohen Leistungsbedarf hat. Weiterhin sind Verdrängerpumpen nicht besonders geeignet für den Betrieb im Vakuum. Sie benötigen im Vakuum eine relativ hohe Zulaufhöhe und nehmen bei der häufig wegen Druckschwankungen vorkommenden Schaumbildung im Seitenraum Gasblasen mit auf. Die Folge davon sind Kavitationen, die nicht nur zu störenden Geräuschen, sondern auch zu Beschädigungen führen können.

Aus der DE-C-761 748 ist eine Schmiereinrichtung für die Wellenund Zapfenlager für die Kurbelwelle von Kolbenmaschinen, insbesondere Brennkraftmaschinen, bekannt. Die Wellen- und Zapfenlager sind von Ölfangrinnen umgeben, die das aus den Lagern austretende Öl aufnehmen. Das Öl wird durch ein stillstehendes Schöpfrohr abgeleitet. Wie bei einer Vakuumpumpe mit einem teilweise mit Öl gefüllten, unter Vakuum stehenden Seitenraum, eine das Öl aus dem Ölsumpf blasenfrei aufnehmende Ölfördereinrichtung zu gestalten ist, offenbart diese Entgegenhaltung nicht.

Der vorliegenden Erfindung liegt die Aufgabe zugrunde, eine Ölfördereinrichtung der eingangs genannten Art zu schaffen, welche einfacher als die vorbekannte Lösung ist und dennoch die geschilderten Nachteile nicht hat.

Erfindungsgemäß wird diese Aufgabe dadurch gelöst, daß die Ölfördereinrichtung eine auf dem Wellenstumpf angeordnete, bis unterhalb des Ölspiegels sich erstreckende Scheibe mit einer radial nach innen offenen Rinne umfaßt und daß in die Rinne eine feststehende, der Ölförderung dienende Leitung derart hineinragt, daß die Öffnung der Ölleitung der Drehrichtung der Scheibe zugewandt ist. Eine Staurohr-Lösung dieser Art hat den Vorteil, daß sie nur eine geringe.

Zulaufhöhe erfordert und sowohl bei horizontaler als auch vertikaler Einbaulage der Pumpe funktioniert. Ihre Funktion ist auch bei einer Schaumbildung nicht gestört, da die Ölrinne aufgrund der Zentrifugalkraft nur blasenfreies Öl und keinen Schaum aufnimmt. Schließlich besteht ein weiterer Vorteil darin, daß die Scheibe direkt auf den Wellenstumpf montierbar ist. Antriebe mit gesonderten Zahnradgetrieben sind also nicht erforderlich.

Die erfindungsgemäße Ölfördereinrichtung liefert Drucköl bis zu 2 bar, das z.B. der Zahnradschmierung, Lagerschmierung, der Schmierung von Gleitringdichtungen am Schöpfraum, der Schmierung eines Spaltrohrmotors oder dergleichen dienen kann.

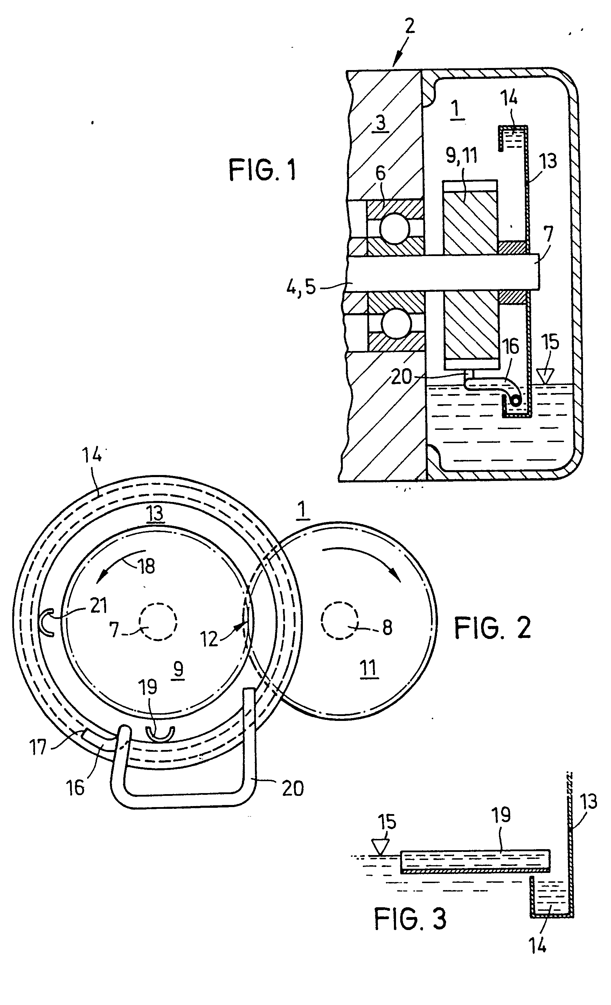

Weitere Vorteile und Einzelheiten der Erfindung sollen anhand von in den Figuren 1 bis 6 schematisch dargestellten Ausführungsbeispielen erläutert werden.

Fig. 1 zeigt einen seitlichen Getrieberaum 1 einer Wälzkolbenvakuumpumpe 2. Die Wandung 3 trennt den Getrieberaum 1 vom nicht dargestellten Schöpfraum der Vakuumpumpe. Die Wellen 4, 5 (s. a. Fig. 2) sind durch die Wandung 3 hindurchgeführt und in dieser gelagert (Lagerung 6). Üblicherweise sind zwischen der Lagerung 6 und dem Schöpfraum Simmerringe oder Labyrinthdichtungen vorgesehen, die eine Trennung des Schöpfraumes vom Getrieberaum 1 bewirken.

Auf den in den Getrieberaum 1 hineinragenden Wellenstümpfen 7, 8 sind Zahnräder 9, 11 montiert, die bei 12 in Eingriff stehen (Fig. 2). Außerdem ist auf dem Wellenstumpf 7 die Scheibe 13 befestigt, deren Peripherie eine nach innen offene Rinne 14 aufweist. Der Durchmesser der Scheibe 13 ist so gewählt, daß sie bis unterhalb des Ölstandes 15 reicht, so daß Öl in die Rinne 14 gelangen kann.

In die Rinne 14 ragt ein feststehendes Staurohr 16 derart hinein, daß seine Öffnung 17 der Drehrichtung der Scheibe 13 - gekennzeichnet durch den Pfeil 18 - entgegengerichtet ist. Dadurch wird das in der Rinne 14 befindliche Öl in das Staurohr 16 gedrückt und über die sich anschließende Ölleitung zu den Stellen gefördert, an denen Öl benötigt wird.

Bei dem in den Figuren 1 und 2 dargestellten Ausführungsbeispiel schließt sich an das Staurohr 16 eine das Öl fördernde Leitung 20 an, deren Mündung auf den Zahnradeingriff 12 gerichtet ist. Das von der Eintrittsöffnung 17 des Staurohres 16 aufgenommene Öl gelangt durch die Leitung 20 in den Zahneingriff 12 und bewirkt nicht nur die gewünschte Schmierung, sondern vor allem eine erhebliche Geräuschdämpfung.

Sollte der Ölstand 15 sehr niedrig gewählt sein, so daß der Zulauf des Öls in die Rinne 14 nicht immer gewährleistet ist, dann ist es zweckmäßig, eine feststehende Zulaufrinne 19 vorzusehen (Figuren 2 und 3). Die Zulaufrinne ist in Höhe des Ölspiegels 15 senkrecht zur Ebene 13 angeordnet, und zwar derart, daß sie vom nur unwesentlich von der rotierenden Scheibe 13 beeinflußten Bereich des Ölspiegels bis oberhalb der Rinne 14 reicht. Der Zulauf von Öl in die Rinne 14 ist dadurch sichergestellt. Bei dem in den Figuren 1 bis 3 dargestellten Ausführungsbeispiel ist das Staurohr 16 ebenfalls im Bereich des Ölspiegels 15 angeordnet. Seine Lage ist jedoch unabhängig vom Ölspiegel 15. Wesentlich ist nur, daß die Mündung 17 innerhalb der Rinne 14 liegt.

In Fig. 2 ist eine um 90° versetzte weitere Rinne 21 dargestellt. Diese ist wirksam, wenn die Vakuumpumpe mit einer um 90° versetzten Einbaulage betrieben wird.

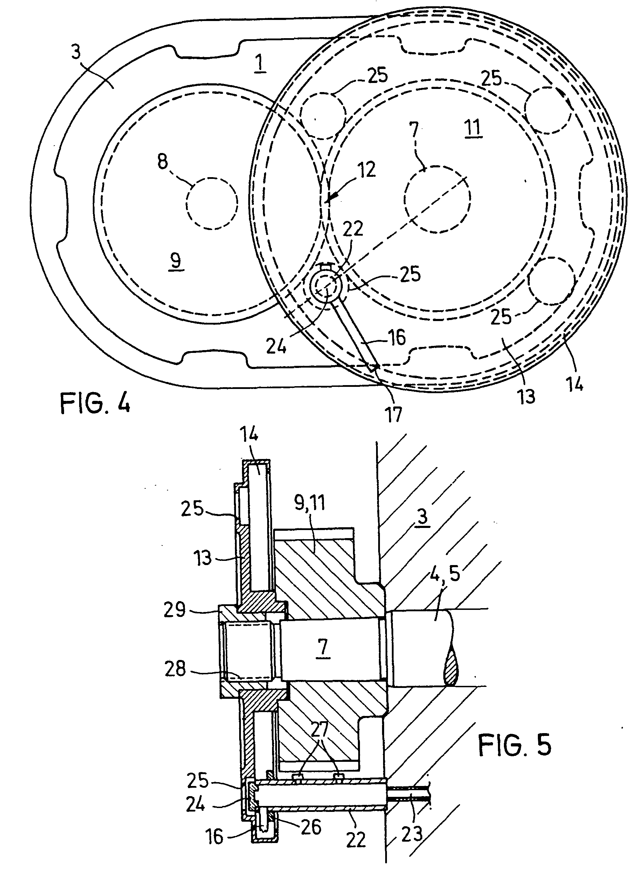

Die Figuren 4 und 5 zeigen ein Ausführungsbeispiel, bei dem ein Ölführungsrohr 22 vorgesehen ist, das in der Wandung 3 gehaltert und bis in den Bereich der Rinne 14 hineinragt. Innerhalb der Wandung 3 setzt sich die Rohrleitung 22 durch eine Ölleitung 23 fort, die zu den verschiedensten Stellen führen kann, wo Drucköl benötigt wird. Stirnseitig ist das Rohr 22 mit dem Stopfen oder der Schraube 24 verschlossen. Durch die Öffnung 25 in der Scheibe 13 ist dieser Verschluß 24 erreichbar. Weiterhin ist im Bereich der Stirnseite des Rohres 22 das Staurohr 16 befestigt, das in die Rinne 14 hineinragt. Das vom Staurohr 16 aufgenommene Öl wird in die Rohrleitung 22 gedrückt.

Weiterhin ist das Rohr 22 in dem oberhalb der Rinne 14 liegenden Bereich mit einer Ringscheibe 26 ausgerüstet, die bewirkt, daß vom Staurohr 16 aufgewirbeltes Öl in die Rinne 14 zurücktropft. Die Wandung des Rohres 22 ist mit Düsen 27 versehen, die auf den Zahneingriff 12 gerichtet sind und dessen Ölversorgung sicherstellen.

Zur Halterung der Scheibe 13 ist der Wellenstumpf 7 mit einem Gewinde 28 ausgerüstet, auf das die Mutter 29, die die Scheibe 13 fixiert und zentriert, aufgeschraubt ist.

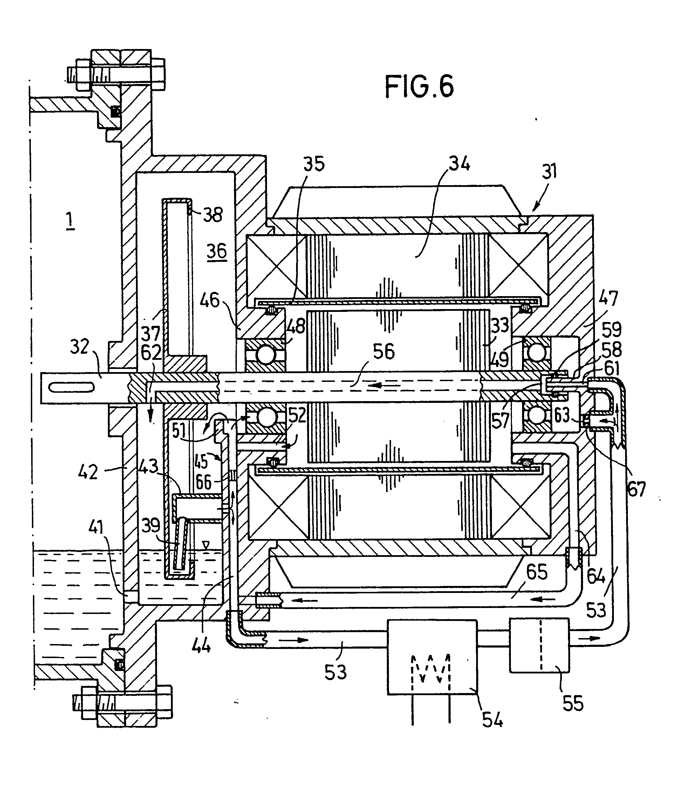

Fig. 6 zeigt einen Antriebsmotor 31, der für den Antrieb einer in Fig. 1 dargestellten Vakuumpumpe 2 geeignet ist. Die Motorwelle 32 ragt in den Seitenraum 1 hinein und wird mit der Welle 7 der Vakuumpumpe 2 gekoppelt.

Der Motor 31 ist ein Spaltrohrmotor, bei dem zwischen Rotor 33 und Stator 34 das Spaltrohr 35 angeordnet ist, das Rotor- und Statorraum vakuumdicht voneinander trennt. Während des Betriebs kann im Rotorraum ein Vakuum aufrechterhalten werden, weshalb diese Motortypen für den Antrieb von Vakuumpumpen besonders geeignet sind.

Dem Antriebsmotor 31 ist innerhalb der Kammer 36 eine separate Ölfördereinrichtung zugeordnet wie sie in den Figuren 4 und 5 dargestellt ist. Sie besteht aus der auf der Welle 32 befestigten Ringscheibe 37 mit der peripher angeordneten Rinne 38, in die ein Staurohr 39 hineinragt. Der Seitenraum 1 und die Kammer 36 stehen über die Öffnung 41 in der Trennwand 42 miteinander in kommunizierender Verbindung. An Stelle der separaten Ölfördereinrichtung für den Antriebsmotor könnte auch die im Seitenraum 1 befindliche Ölfördereinrichtung der Versorgung des Antriebsmotors 31 mit Schmiermitteln dienen, und zwar entweder dadurch, daß in die Rinne 14 der Ringscheibe 13 ein zweites Staurohr eintaucht oder dadurch, daß vom Anschlußrohr 22 eine zum Antriebsmotor 31 führende Schmiermittelleitung abgezweigt wird.

Bei der in Fig. 6 dargestellten und allein dem Antriebsmotor 31 zugeordneten Ölfördereinrichtung schnten Ölfördereinrichtung schließt sich an das Staurohr 39 der Leitungsabschnitt 43 an, der mit einem sich im wesentlichen vertikal erstreckenden Kanalabschnitt 44 in Verbindung steht. Er wird von einer Bohrung in einer Verdickung 45 der Lagerwand 46 gebildet. In dieser Lagerwand 46 und in der äußeren Stirnwand 47 stützen sich die Lager 48 und 49 der Welle 32 ab. Der Kanalabschnitt 44 endet oben im Bereich des Lagers 48 und ist dort mit einem Überlauf 51 ausgerüstet. Der nicht vom Lager 48 aufgenommene Teil des Schmiermittels strömt direkt in den Ölsumpf zurück. Die das Lager 48 durchsetzende Schmiermittelmenge strömt durch einen unterhalb des Lagers 48 befindlichen, die Lagerwand 46 durchsetzenden Kanal 52 zurück in die Kammer 36. Der Kanal 52 ist gegenüber dem Kanalabschnitt 44 versetzt angeordnet.

An das andere Ende des Kanalabschnittes 44 schließt sich eine außerhalb des Antriebsmotors geführte Schmiermittelleitung 53 an, in die ein Ölkühler 54 und ein Ölfilter 55 angeordnet sind.

Um die Welle 32 und damit den Rotor 33 kühlen zu können, ist die Welle 32 mit einem zentralen Kanal 56 ausgerüstet. Im Bereich der Stirnseite 47 weist die Welle 32 eine zum Kanal 56 konzentrische Erweiterung 57 auf, in die ein mit der Stirnwand 47 verbundener Stutzen 58 eingreift. Dieser ist auf seiner Außenseite mit dem Dichtring 59 ausgerüstet, so daß zwischen dem Stutzen 58 und der Welle 56 eine dichte Verbindung hergestellt ist. Durch eine zentrale Bohrung 61 im Stutzen 58 wird das das Ölfilter verlassende Schmiermittel der Welle 32 zugeführt und erfüllt darin die Funktion des Kühlens. Im Bereich des Raumes 36 endet der Kanal 56 in der Welle 32 in einer seitlichen Bohrung 62, so daß das Öl in den Ölsumpf zurückströmt.

Die Leitung 53 ist zusätzlich noch mit einem Abzweig 63 ausgerüstet, der zum Lager 49 führt und für die ausreichende Schmierung dieses Lagers sorgt. Überschüssiges Öl strömt durch den Kanal 64 in der Stirnwand 47 und die Leitung 65 in den Ölsumpf zurück.

Die in den verschiedenen Leitungen strömenden Ölmengen können mittels Drosseln begrenzt werden, so daß eine ausreichende Versorgung aller notwendigen Stellen sichergestellt ist. In den Kanalabschnitt 44 und in dem Leitungsabschnitt 63 sind beispielsweise Drosseln 66 und 67 dargestellt.

**Patentansprüche**

1. Ölfördereinrichtung für Vakuumpumpen mit einem teilweise mit Öl gefüllten, unter Vakuum stehendem Seitenraum (1), vorzugsweise für Wälzkolben-Vakuumpumpen, bei welchen ein in den Seitenraum hineinragender Wellenstumpf (7) den Antrieb der Ölfördereinrichtung bildet, dadurch gekennzeichnet, daß sie eine auf dem Wellenstumpf (7) angeordneten, bis unterhalb des Ölspiegels (15) sich erstreckende Scheibe (13) mit einer radial nach innen offenen Rinne (14) umfaßt und daß in diese Rinne (14) eine feststehende, der Ölförderung dienende Leitung (16, 20) derart hineinragt, daß die Öffnung (17) der Ölleitung der Drehrichtung der Scheibe (13) zugewandt ist.

2. Ölfördereinrichtung nach Anspruch 1, dadurch gekennzeichnet, daß die Ölleitung (16, 18 bzw. 16, 22) der Versorgung einer oder mehrerer Stellen in der Vakuumpumpe mit Drucköl dient.

3. Ölfördereinrichtung nach Anspruch 1 oder 2 für eine Wälzkolben-Vakuumpumpe mit zwei im Seitenraum in Eingriff stehenden Zahnrädern, dadurch gekennzeichnet, daß die Ölleitung (18) im Bereich des Zahneingriffs (12) der Zahnräder (9, 11) enden.

4. Ölfördereinrichtung nach einem der vorhergehenden Ansprüche, dadurch gekennzeichnet, daß die Ölleitung (22) von einem in der Trennwand zwischen Seitenraum und Schöpfraum gehalterten Rohr gebildet wird, an dessen freiem Ende ein in die Rinne (14) hineinragendes Staurohr (16) befestigt ist.

5. Ölfördereinrichtung nach Anspruch 4, dadurch gekennzeichnet, daß das Rohr (22) bis in den Bereich oberhalb der Rinne (14) ragt und dort mit einem Ring (26) ausgerüstet ist.

6. Ölfördereinrichtung für eine Wälzkolben-Vakuumpumpe mit zwei im Seitenraum (1) in Eingriff stehenden Zahnrädern, dadurch gekennzeichnet, daß sich das Rohr (22) unterhalb des Eingriffes (12) der Zahnräder (9, 11) erstreckt und dort mit auf den Zahneingriff (12) gerichteten Düsen (27) oder Bohrungen ausgerüstet ist.

7. Vakuumpumpe mit einer Ölfördereinrichtung nach einem der vorhergehenden Ansprüche, bei der ein in den teilweise mit Öl gefüllten Seitenraum hineinragender Wellenstumpf mit der Welle eines vorzugsweise als Spaltrohrmotor ausgebildeten Antriebsmotors gekoppelt ist, dadurch gekennzeichnet, daß dem Antriebsmotor (31) zur Schmiermittelversorgung seiner Lager (48, 49) und/oder zur Kühlung des Motorrotors (33) ebenfalls eine Ölfördereinrichtung (37, 38) mit einem Staurohr (39) zugeordnet ist.

8. Vakuumpumpe nach Anspruch 7, dadurch gekennzeichnet, daß antriebsseitig nur eine Ölfördereinrichtung vorgesehen ist, die der Schmiermittelversorgung der Vakuumpumpe (2) und des Motors (31) dient.

9. Vakuumpumpe nach Anspruch 4, dadurch gekennzeichnet, daß die teilweise mit Öl gefüllten Räume (1, 36), in denen die Ölfördereinrichtungen untergebracht sind, miteinander in kommunizierender Verbindung stehen.

10. Vakuumpumpe nach Anspruch 7, 8 oder 9, dadurch gekennzeichnet, daß die dem Antriebsmotor (31) zugeordnete Ölfördereinrichtung (37 bis 39) mit einem Leitungssystem (53) in Verbindung steht, das mit einem Ölkühler (54) und/oder einem Ölfilter (55) ausgerüstet ist.

11. Vakuumpumpe nach einem der Ansprüche 7 bis 10, dadurch gekennzeichnet, daß das innerhalb des Antriebsmotors (31) befindliche Leitungssystem mehrere parallel angeordnete Teilstromleitungen umfaßt, die zur Steuerung der erforderlichen Ölmengen mit Drosseln ausgerüstet sind.

12. Vakuumpumpe nach Anspruch 11, dadurch gekennzeichnet, daß in eines der Leitungssysteme ein in der Motorwelle befindlicher Kanal (56) eingeschlossen ist.

## Revendications

1. Dispositif de refoulement d'huile pour pompes à vide possédant un espace latéral (1) sous vide et partiellement rempli d'huile, de préférence pour pompes à vide à organes rotatifs engrenants (dépresseurs Roots), sur lesquelles un bout d'arbre (7) faisant saillie dans l'espace latéral assure l'entraînement du dispositif de refoulement d'huile, caractérisé en ce qu'il comprend un disque (13) calé sur le bout d'arbre (7), s'étendant jusque sous la surface (15) de l'huile et pourvu d'une rigole (14) s'ouvrant radialement vers l'intérieur, et qu'une conduite (16, 20) disposée fixe et servant au refoulement d'huile, fait saillie dans cette rigole (14) de manière que l'ouverture (17) de la conduite d'huile soit dirigée vers le sens de rotation du disque (13).

2. Dispositif selon la revendication 1, caractérisé en ce que la conduite d'huile (16, 18 ou 16, 22) sert à l'alimentation d'un ou de plusieurs endroits dans la pompe à vide avec de l'huile sous pression.

3. Dispositif selon la revendication 1 ou 2, pour une pompe à vide à organes rotatifs engrenants, comportant deux pignons mutuellement en prise dans l'espace latéral, caractérisé en ce que la conduite d'huile (18) se termine dans la zone d'engrènement (12) des pignons (9, 11).

4. Dispositif selon une des revendications précédentes, caractérisé en ce que la conduite d'huile (22) est formée par un tube maintenu dans la cloison entre l'espace latéral et la chambre d'aspiration et à l'extrémité libre duquel est fixé un tube de refoulement (16) pénétrant dans la rigole (14).

5. Dispositif selon la revendication 4, caractérisé en ce que le tube (22) s'étend jusque dans la région au-dessus de la rigole (14) et est muni à cet endroit d'une rondelle (26).

6. Dispositif de refoulement d'huile pour une pompe à vide à organes rotatifs engrenants, comportant deux pignons mutuellement en prise dans un espace latéral (1), caractérisé en ce que le tube (22) s'étend sous la zone d'engrènement (12) des pignons (9, 11) et est pourvu à cet endroit de gicleurs (27) ou d'ajutages dirigés sur la zone d'engrènement (12).

7. Pompe à vide possédant un dispositif de refoulement d'huile selon une des revendications précédentes, sur laquelle un bout d'arbre de la pompe à vide, faisant saillie dans l'espace latéral partiellement rempli d'huile, est accouplé à l'arbre d'un moteur d'entraînement constitué de préférence par un moteur à gaine, caractérisée en ce qu'un dispositif de refoulement d'huile (37, 38) avec un tube de refoulement (39) sont coordonnés également au moteur d'entraînement (31) pour l'alimentation en lubrifiant de ses paliers (48, 49) et/ou pour le refroidissement du rotor (33) du moteur.

8. Pompe selon la revendication 7, caractérisée en ce que, côté entraînement, on a prévu seulement un dispositif de refoulement d'huile, servant à l'alimentation en lubrifiant de la pompe à vide (2) et du moteur (31).

9. Pompe selon la revendication 7, caractérisée en ce que les espaces (1, 36), partiellement remplis d'huile, dans lesquels sont logés les dispositifs de refoulement d'huile, communiquent l'un avec l'autre.

10. Pompe selon la revendication 7, 8 ou 9, caractérisée en ce que le dispositif de refoulement d'huile (37 à 39) coordonné au moteur d'entraînement (31), est en liaison avec un système de canalisation (53) équipé d'un réfrigérant d'huile (54) et/ou d'un filtre d'huile (55).

11. Pompe selon une des revendications 7 à 10, caractérisée en ce que le système de canalisation se trouvant à l'intérieur du moteur d'entraînement (31), comprend plusieurs conduites disposées en parallèle et traversées par des courants partiels, qui sont équipées d'étranglements pour le dosage des débits d'huile nécessaires.

12. Pompe selon la revendication 11, caractérisée en ce que l'une des conduites comprend un canal (56) ménagé dans l'arbre du moteur.

## Claims

1. An oil feed device for vacuum pumps, having an evacuated side chamber (1) partially filled with oil, preferably for rotary piston vacuum pumps in which a shaft end (7) projecting into the side chamber forms the drive for the oil feed device, characterised in that it comprises a disc (13) which is disposed on the shaft end (7) and extends to a point below the oil level (15) and has a radially inwardly open channel (14), and that a fixed line (16, 20) for feeding oil extends into the channel (14) in such a way that the mouth (17) of the oil line faces the direction of rotation of the disc (13).

2. An oil feed device as claimed in claim 1, characterised in that the oil line (16, 18 or 16, 22) serves to supply one or a plurality of locations in the vacuum pump with pressure oil.

3. An oil feed device as claimed in claim 1 or 2, for a rotary piston vacuum pump having two intermeshing gear wheels in the side chamber, characterised in that the oil line (18) terminates in the region of the meshing location (12) of the gear-wheels (9, 11).

4. An oil feed device as claimed in one of the preceding claims, characterised in that the oil line (22) is formed by a tube which is mounted in the partition between the side chamber and the expansion chamber and to the free end of which is secured a pressure tube (16) projecting into the channel (14).

5. An oil feed device as claimed in claim 4, characterised in that the tube (22) projects into the region above the channel (14) and is equipped with a ring (26) in this region.

6. An oil feed device for a rotary piston vacuum pump having two intermeshing gear-wheels in the side chamber (1), characterised in that the tube (22) extends below the meshing location (12) of the gear-wheels (9, 11) where the said tube is provided with nozzles (27) or bores directed toward the meshing location (12).

7. A vacuum pump having an oil feed device as claimed in one of the preceding claims, in which a shaft end projecting into the side chamber partially filled with oil is coupled to the shaft of a drive motor preferably in the form of a canned motor, characterised in that an oil feed device (37, 38) having a pressure tube (39) is also associated with the drive motor (31) for the purpose of supply lubricant to the bearings (48, 49) thereof and/or for cooling the motor rotor (33).

8. A vacuum pump as claimed in claim 7, characterised in that only one oil feed device is provided on the drive side and serves to supply the vacuum pump (2) and the motor (31) with oil.

9. A vacuum pump as claimed in claim 4, characterised in that the chambers (1, 36) partially filled with oil, and in which the oil feed devices are accommodated, communicate with one another.

10. A vacuum pump as claimed in claim 7, 8 or 9, characterised in that the oil feed device (37 to 39) associated with the the drive motor (31) communicates with a line system (53) which is equipped with an oil cooler (54) and/or an oil filter (55).

11. A vacuum pump as claimed in one of claims 7 to 10, characterised in that the line system located within the drive motor (31) comprises a plurality of parallel component-flow lines which are equipped with throttles for controlling the quantities of oil required.

12. A vacuum pump as claimed in claim 11, characterised in that a passage (56) located in the motor shaft is included in one of the line systems.

FIG. 1

FIG. 2

FIG. 3

EP 0 188 713 B1

FIG. 4

FIG. 5

2

FIG.6